**Europäisches Patentamt**

**European Patent Office**

**Office européen des brevets**

(11) Veröffentlichungsnummer: **0 007 969**
A1

# EUROPÄISCHE PATENTANMELDUNG

(21) Anmeldenummer: **79100192.8**

(22) Anmeldetag: **23.01.79**

(51) Int. Cl.³: **B 23 K 7/02**

(30) Priorität: **03.08.78 DE 2834041**

(43) Veröffentlichungstag der Anmeldung: **20.02.80**
**Patentblatt 80/4**

(84) Benannte Vertragsstaaten: **BE CH DE FR GB IT NL SE**

(71) Anmelder: **I.P.U. Limited, 50, Shirley Street,**
**Nassau (BS)**

(72) Erfinder: **Hennecke Franz, Zumscharfenberg 33,**
**D-5760 Arnsberg (DE)**

(74) Vertreter: **Blumbach, Paul-Günther, Dipl.-Ing. et al,**
**Blumbach.Weser.Bergen.Kramer Zwirner.Brehm**
**Patentanwälte Sonnenberger Strasse 43, D-6200**
**Wiesbaden 1 (DE)**

(54) Verfahren und Vorrichtung zum bartfreien Schneiden von Stranggussstücken.

(57) Die Erfindung betrifft ein Verfahren und eine Vorrichtung zum bartfreien Schneiden, wobei im Schneidbereich an der Unterseite des zu schneidenden Stranggußstückes ein Abdeckteil angebracht wird, durch das der Schnitt gleichzeitig durchgeführt wird. Das mitgeschnittene Abdeckteil wird anschließend entfernt. Das Abdeckteil kann aus einzelnen Stücken oder einem synchron geführten Materialband bestehen.

# BLUMBACH · WESER · BERGEN · KRAMER
## ZWIRNER · BREHM
### PATENTANWÄLTE IN MÜNCHEN UND WIESBADEN

Patentconsult Radeckestraße 43 8000 München 60 Telefon (089) 883603/883604 Telex 05-212313 Telegramme Patentconsult
Patentconsult Sonnenberger Straße 43 6200 Wiesbaden Telefon (06121) 562943/561998 Telex 04-186237 Telegramme Patentconsult

0007969

I.P.U. Limited
50, Shirley Street
Nassau/Bahamas

Case 27

Verfahren und Vorrichtung zum bartfreien Schneiden von Stranggußstücken

Die Erfindung betrifft ein Verfahren zum bartlosen Schneiden von Stranggußstücken und eine Vorrichtung zur Durchführung des Verfahrens.

Bei Stranggießanlagen wird der erzeugte Strangguß unter
Einsatz von Brennschneidmaschinen in Stranggußstücken
bzw. Brammen mit vorbestimmter Länge unterteilt. Zusätzlich ist es teilweise auch erforderlich, den Strangguß,
insbesondere die Brammen in Längsrichtung zu zerteilen.

Beim Zerteilen mit Schneidbrennern entstehen im Verlauf
der Schnittlinien an der Unterseite der Stranggußstücke
sogenannte Schlackenbärte, deren nachträgliches Entfer-

München: R. Kramer Dipl.-Ing. · W. Weser Dipl.-Phys. Dr. rer. nat. · H. P. Brehm Dipl.-Chem. Dr. phil. nat.
Wiesbaden: P. G. Blumbach Dipl.-Ing. · P. Bergen Dipl.-Ing. Dr. jur. · G. Zwirner Dipl.-Ing. Dipl.-W.-Ing.

nen mit mechanischen Mitteln durch damit verbundenen Zeit- und Maschinenaufwand unnötige und zusätzliche Kosten bei der Herstellung von Strangguß verursacht.

Der Erfindung liegt die Aufgabe zugrunde, ein Verfahren und Vorrichtungen zum Schneiden von Strangguß vorzuschlagen, bei deren Anwendung das Entstehen von Schlackenbärten an der Unterseite der Brammen vermieden wird.

Diese Aufgabe wird erfindungsgemäß dadurch gelöst, daß im Schnittbereich an der Unterseite des zu schneidenden Stranggußstückes, beispielsweise einer Bramme, ein Abdeckteil angeordnet wird, daß der Schnitt durch das Stranggußstück und das Abdeckteil gleichzeitig durchgeführt wird, und daß anschließend das mitgeschnittene Abdeckteil von den Enden des Stranggußstückes entfernt wird.

Ein wesentliches Merkmal der Erfindung besteht darin, daß · Schlackenbärte, die sich immer an der Unterkante des durchschnittenen Querschnitts bilden, an dem Abdeckteil entstehen, so daß mit dem Entfernen des Abdeckteils auch sämtliche Schlackenbärte, die sich gebildet haben, auf einfache Weise entfernt werden können. Eine Nachbearbeitung der Brammen erübrigt sich.

Vorteilhafterweise kann als Abdeckteil ein Metallblech oder ein ähnlich abgekantetes Profil verwendet werden.

Zweckmäßig wird dabei das Abdeckteil an beiden Seiten der Bramme vor und hinter dem durchzuführenden Schnitt befestigt, beispielsweise mit Hilfe von Klammern, Klemmen oder dergleichen.

In einer anderen vorteilhaften Ausführungsform des Verfahrens bzw. einer Vorrichtung ist vorgesehen, als Abdeckteil ein Materialband zu benutzen. Vorzugsweise kann dabei mit einer feststehenden Schneideinrichtung gearbeitet, und dem Materialband synchron mit zu schneidenden Stranggußstück ein Vorschub erteilt werden.

Bei einer anderen vorteilhaften Ausführungsform des erfindungsgemäßen Verfahrens bzw. einer dafür geeigneten Vorrichtung ist die Schneidvorrichtung bewegbar angeordnet, das Materialband befindet sich an der Schneidstelle, und das Stranggußstück wird anschließend vor dem Schneidvorgang auf das Materialband entsprechend aufgebracht.

Dabei kann es vorteilhaft sein, das Materialband von einem Wickel abzuziehen und in die Arbeitsposition zu bewegen, oder alternativ dazu Bandabschnitte zu einem Materialband zu verbinden und in die Arbeitsposition zu bewegen.

Bei einer zur Durchführung des Verfahrens geeigneten erfindungsgemäßen Vorrichtung mit einem feststehenden Brenner ist eine Vorschubeinrichtung vorgesehen, die von einem Wickel das Materialband zwischen Rollgang und Stranggußstück synchron mit dem Stranggußstück bewegt. Damit das Materialband einwandfrei anliegt, können eine oder mehrere Andrückrollen an der Schneidstelle vorgesehen sein.

Bei einer weiteren Ausführung der erfindungsgemäßen Vorrichtung ist vorgesehen, daß auf der dem Bandwickel gegenüberliegenden Seite der Schnittstelle eine Antriebsrolle und eine mit dieser zusammenwirkende Gegenrolle vorgesehen sind, die dem Materialband eine Vorschubgeschwindigkeit erteilen, welche etwas größer als die Vorschubgeschwindigkeit des Stranggußstückes ist.

Dabei kann es vorteilhaft sein, die Gesamtvorrichtung, insbesondere mit Wickel und Vorschubeinrichtung auf einer unter dem Rollgang festlegbaren Rahmenkonstruktion anzuordnen. Auf diese Weise kann man das Auswechseln des Bandwickels und weitere etwaige Wartungsarbeiten erleichtern.

Bei einer anderen Ausführung einer erfindungsgemäßen Vorrichtung zur Durchführung des Verfahrens mit einem oder mehreren bewegbaren Brennern ist vorgesehen, daß vor der Schnittstelle eine Bandzuführeinrichtung angeordnet ist, von der über den Rollgang unterhalb des Stranggußstückes ein Materialband zu einer Vorschubeinrichtung verläuft.

Die Bandzuführeinrichtung kann auch hier aus einem Bandwickel bestehen, wobei ein bewegbares Lager unter Vorspannung steht und den Bandwickel in eine vorbestimmte Lage drängt, vorzugsweise so, daß der höchste Punkt am Umfang des Wickels über der Auflageebene des Stranggußstückes während des Schnittvorganges liegt.

Vorteilhafterweise kann die Zuführeinrichtung auch aus einem Magazin bestehen, in welchem Bandabschnitte gelagert sind, die eine Verbindungseinrichtung, vorzugsweise eine Schweißzange zwischen Magazin und Schnittstelle miteinander verbindet. Anstelle einer Schweißzange kann aber auch eine Nieteinrichtung oder eine andere Verbindungseinrichtung verwendet werden.

Zusätzlich kann es vorteilhaft sein, zwischen Bandzuführeinrichtung und Schnittstelle eine Klemmeinrichtung vorzusehen, die verhindert, daß sich das Band während des Schneidvorganges verschiebt.

Gemäß einer Weiterbildung des Erfindungsgedankens ist vorgesehen, daß das Materialband aus zwei Bandhälften besteht, die getrennt voneinander und zwischen sich einen Abstand als Schneidschlitz freilassend geführt sind. Dabei ist vorzugsweise im Schneidbereich eine Andrück- und Führungsrolle vorgesehen, die in der Mitte einen vorstehenden Führungsring aufweist, der dem Schneidschlitz entspricht, wobei die Rolle konische Führungsflächen besitzt, welche die Bandhälften zur Anlage an den Führungsring bringen.

Für einen erleichterten Abtransport kann vorgesehen sein, das Materialband hinter der Antriebseinrichtung zu zerteilen oder zu zerkleinern.

Nachstehend werden einige, die Merkmale der Erfindung aufweisende Ausführungsbeispiele unter Bezugnahme auf eine Zeichnung näher erläutert. Darin zeigen:

Fig. 1 eine Seitenansicht einer Vorrichtung zum bartfreien Schneiden von Stranggußstücken mit stationärem Brenner;

Fig. 2 eine Ansicht der Vorrichtung von Fig. 1 von links;

Fig. 3 eine Vorrichtung mit bewegbaren Brennern und einem Bandwickel;

Fig. 4 eine andere Vorrichtung mit bewegbaren Brennern;

Fig. 5 eine Andrück- und Führungsrolle für ein geteiltes Materialband;

Fig. 6 eine Draufsicht auf eine Bramme mit darunter befestigtem Abdeckteil;

Fig. 7 eine Ansicht von unten auf eine mit einem Abdeckteil, dessen Breite der Brammenbreite entspricht, unterlegte Bramme; und

Fig. 8 eine Stirnansicht der Bramme mit Abdeckteil von Fig. 7.

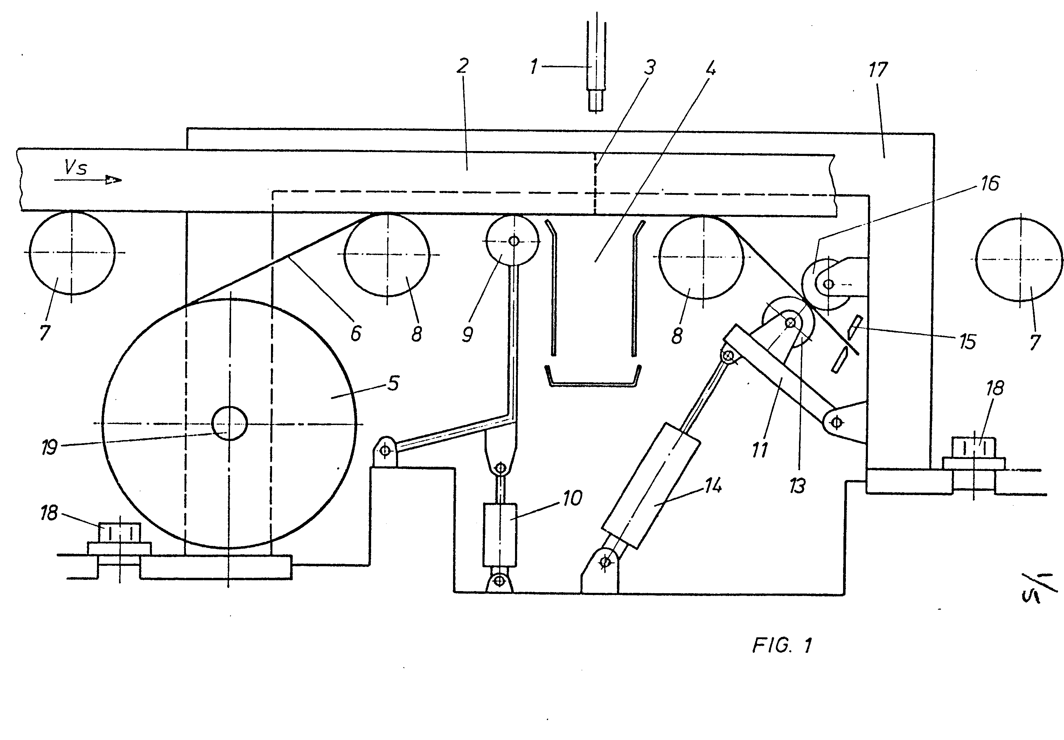

In Fig. 1 ist schematisch eine Vorrichtung dargestellt, die einen feststehenden Brenner 1 aufweist, der durch eine Bramme 2 einen Längsschnitt durchführt, der bei 3 gestrichelt dargestellt ist. Zu diesem Zweck wird die Bramme 2 in der Zeichnung von links nach rechts mit einer Vorschubgeschwindigkeit $V_s$ bewegt, die der Schneidgeschwindigkeit entspricht, so daß mit dem Vorschub der Längsschnitt durchgeführt wird. Unterhalb der feststehenden Schneidstelle 3 ist eine Schüttelrinne 4 angeordnet, die dem Entfernen der Abfälle dient. Damit an der Unterseite der Bramme 2 an der Schnittstelle 3 nicht die sonst üblichen Bärte an der Bramme 2 entstehen, ist als Abdeckteil ein Bandwickel 5 vorgesehen, von dem ein Band 6 über die Rollen 8 des Rollganges 7, 8 unter der Schnittstelle 3 entlanggeführt wird. Die Rollen 8 des Rollganges 7 weisen nicht dargestellte Vertiefungen auf, in dem das Band 6 verläuft. Damit das Band 6 im Bereich der Schnittstelle 3 eng an der Unterseite der Bramme 2 anliegt, ist eine Andrückrolle 9 vorgesehen, die durch einen hydraulischen oder pneumatischen Andrückzylinder 10 betätigt wird. Durch diese Andrückrollen 9 werden insbesondere Verwerfungen des Stranggußstückes 2 ausgeglichen und eine Anlage des Bandes 6 an der Unterseite der Bramme 2 sichergestellt. Auf der des Bandwickels 5 und der Schneidstelle 3 gegenüberliegenden Seite ist eine Antriebseinrichtung 11 vorgesehen, die aus einer Schwinge 12 besteht, auf der die Antriebsrolle 13 sitzt. Ein pneumatischer oder hydraulischer Zylinder 14 stellt wieder den erforderlichen Auflagedruck der Antriebsrolle 13 sicher, die mit einer Gegenrolle 16 in bekannter Weise zusammenwirkt. Hinter der Antriebseinrichtung 11 ist eine Schere 15 vorgesehen, die das Band zerteilt oder zerkleinert und unterhalb der Schere 15 kann eine nicht dargestellte Förderrinne vorgesehen sein, die die Materialabfälle entsprechend der Schüttelrinne 4 entfernt. Die gesamte dargestellte Vorrichtung ist auf einer Rahmenkonstruktion 17 montiert, die bei 18 unterhalb des Rollganges 7, 8 befestigt werden kann. Zum Auswechseln des Bandwickels 5 oder bei Schäden in der Antriebseinrichtung 11 kann die gesamte Vorrichtung ausgetauscht werden, so daß lange Unterbrechungszeiten vermieden werden. Das Materialband kann aus Metall oder einem geeigneten Kunststoff bestehen und wird entsprechend den Betriebsbedingungen von der Antriebseinrichtung 11 mit einer der Vorschubgeschwindigkeit $V_s$

entsprechenden Geschwindigkeit bewegt, wobei die Vorschubgeschwindigkeit des Bandes 6 jedoch etwas größer als die der Bramme 2 sein kann, um ein einwandfreies Anliegen des Bandes 6 zu gewährleisten.

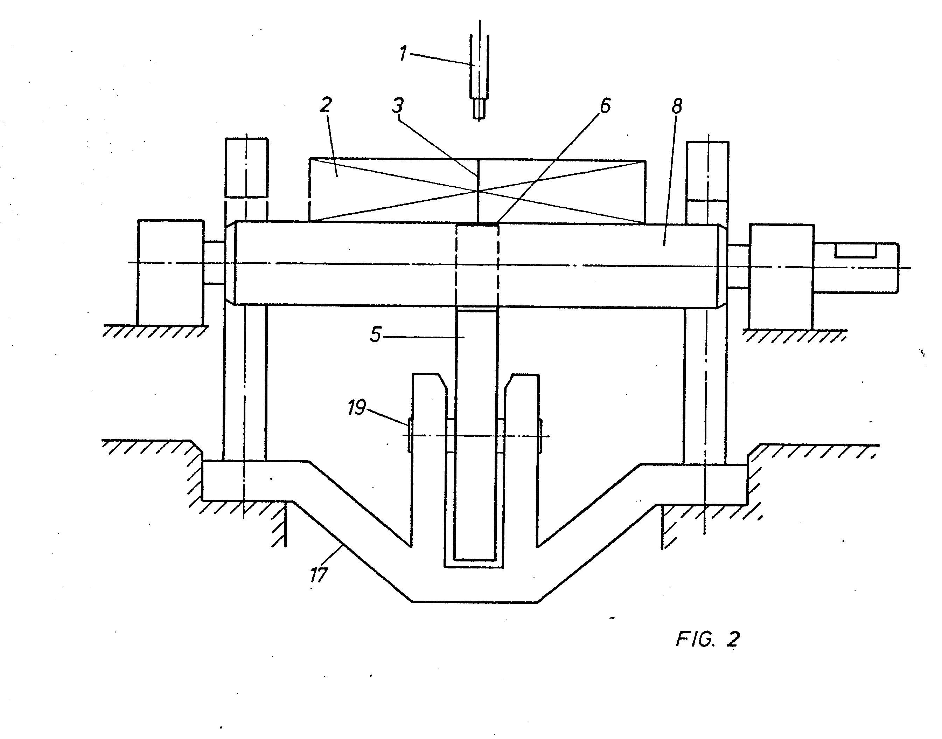

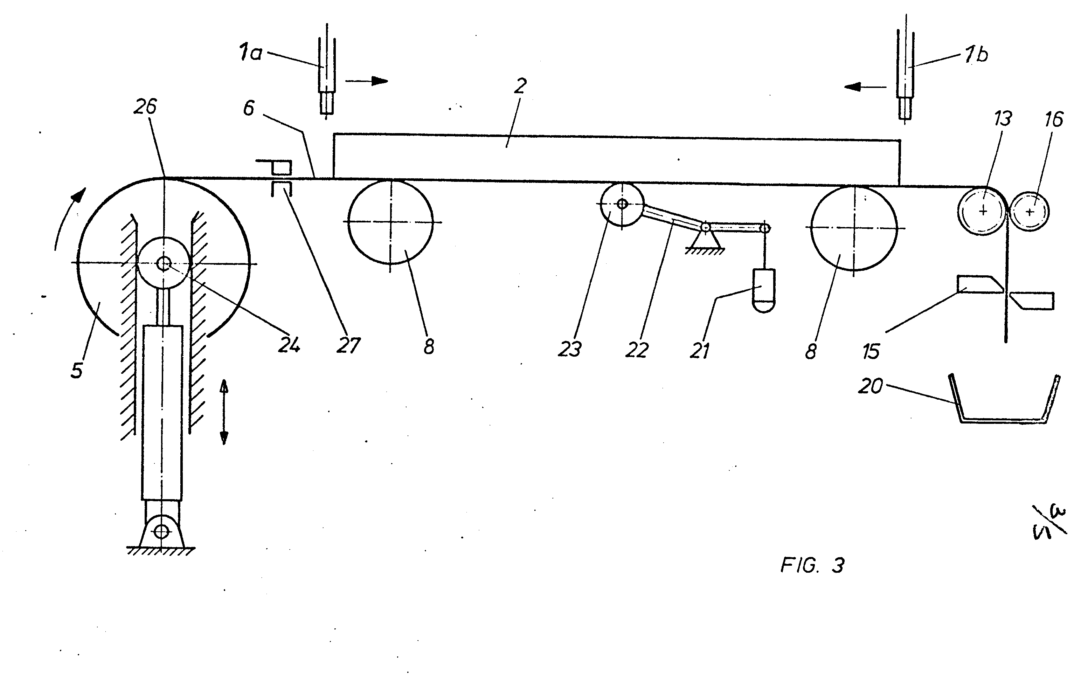

In Fig. 2 ist eine Draufsicht auf die Vorrichtung nach Fig. 1 in Vorschubrichtung dargestellt. Im wesentlichen ist der in der Mitte angeordnete Wickel 5 gezeigt, der über ein Lager 19 mit der Rahmenkonstruktion 17 verbunden ist. Vom Wickel 5 läuft das Band 6 unterhalb der Bramme 2 im Bereich des Längsschnittes 3, den der Brenner 1 durchführt. Die Rolle 8 des Rollganges weist dabei vorzugsweise eine Vertiefung auf, die der Größe des Bandes 6 entspricht.

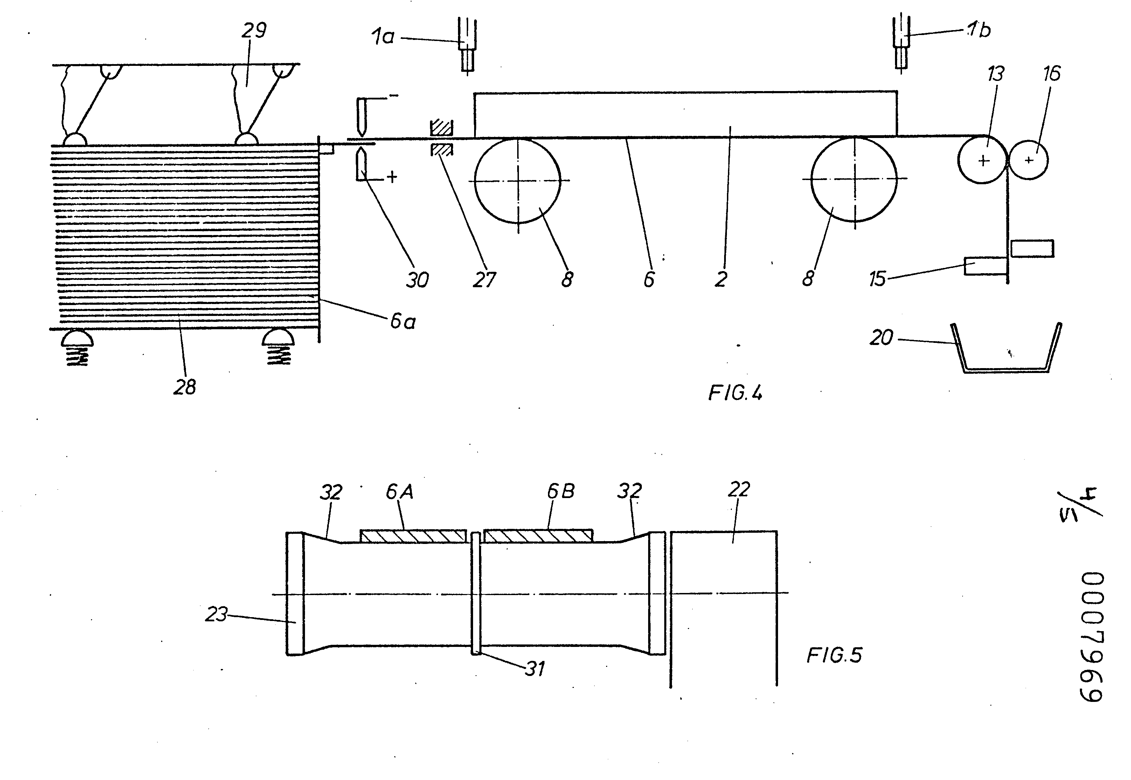

In Fig. 3 ist eine Vorrichtung dargestellt, bei der die Bramme 2 stationär gelagert ist und die Brenner 1a, 1b sich aufeinander zubewegen, um einen Längsschnitt durchzuführen. Auch hier ist ein Wickel 5 dargestellt, von dem ein Band 6 unter der Bramme 2, die auf dem Rollgang 8 liegt, hindurchgeführt wird zu einer aus Antriebsrolle 13 und Gegenrolle 16 bestehenden Antriebseinrichtung, hinter der wieder eine Schere 15 angeordnet ist, in der das Band zerkleinert wird und von einer Rinne 20 antransportiert wird. Mit Hilfe eines pneumatischen oder hydraulischen Zylinders 21 und ein Übertragungsgestänge 22 wird eine An-

0007969

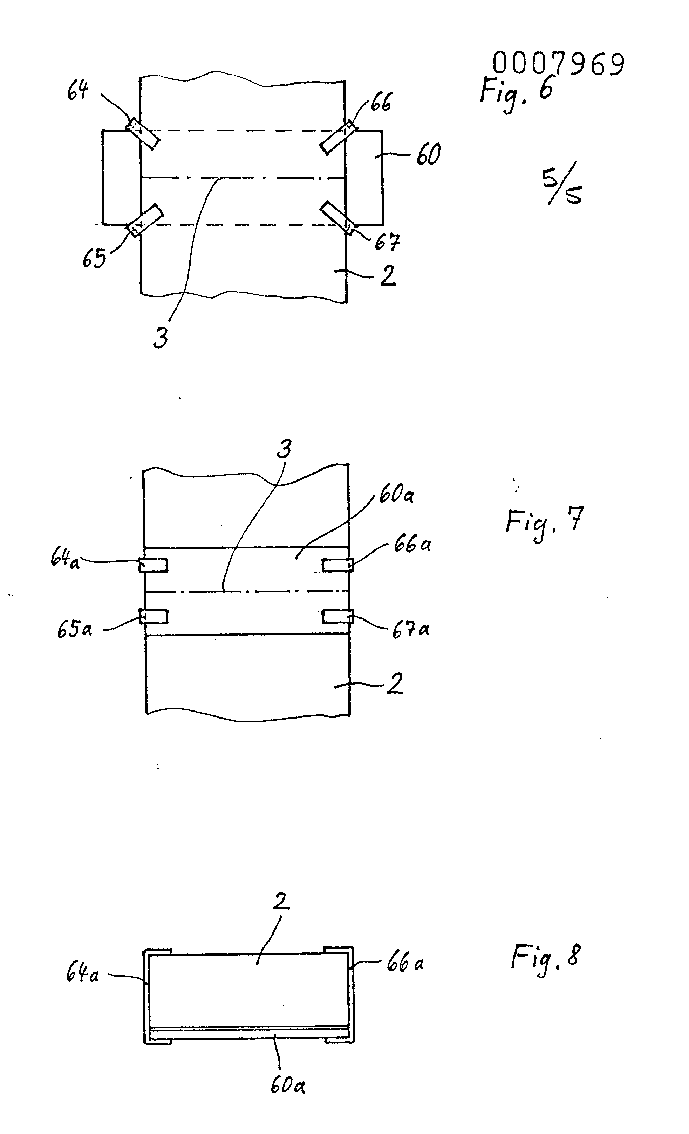

drückrolle 23 betätigt, die dafür sorgt, daß das Band 6 an der Unterseite der Bramme 2 anliegt und die außerdem noch eine Führungsfunktion übernimmt, wenn das Band 6 geteilt wird, wie im einzelnen näher unter Bezugnahme auf Fig. 5 erläutert ist. Der Wickel 5 besitzt ein bewegbares Lager 24, mit Hilfe dessen es sichergestellt werden kann, daß der höchste Punkt 26 des Umfangs des Wickels 5 höher liegt als die Unterseite der Bramme 2 in Schneidstellung. Zwischen dem Wickel 5 und der Bramme 2 ist eine Klemmvorrichtung 27 vorgesehen, mit Hilfe der das Band vor dem Schneidvorgang festgelegt wird, so daß die Gefahr, daß das Band 6 während des Schneidvorganges an der Bramme 2 sich verschiebt, verhindert wird.

Fig. 4 zeigt eine Vorrichtung, die im Prinzip der nach Fig. 3 entspricht. An einer Bramme 2, die auf einem Rollgang 8 liegt, wird ein Längsschnitt durchgeführt, indem die Brenner 1a, 1b sich aufeinander zubewegen. Zwischen der Bramme 2 und dem Rollgang 8 ist ein Band 6 vorgesehen, das wieder durch die Antriebseinrichtung 13, 16 in Stellung gebracht wird, bevor die Bramme 2 auf dem Rollgang 8 aufgelagert wird, wobei vorgesehen sein kann, daß die Rollen 8 abgesenkt werden und die Bramme 2 dann auf einem nicht dargestellten Rost ruht. Durch eine Schere 15 kann das Band 6 zerkleinert werden, wobei eine Schüttelrinne 20 die Abfälle entfernt. Die Zuführeinrichtung besteht im Gegensatz zu der Vorrichtung nach Fig. 3 aus einem Magazin 28, in dem eine Vielzahl von Bandabschnitten 6a gelagert sind. Die Bandabschnitte 6a haben vorzugsweise eine Länge, die der Betriebslänge des Bandes 6 unter der Bramme 2 entspricht. Nach jedem Schneidvorgang wird das unter der Bramme befindliche Band 6 wegbewegt, wobei jedoch zuvor über eine Fördereinrichtung 29 ein Bandabschnitt in Fluchtung mit dem Band 6 in der Arbeitslage gebracht wird und eine Verbindungseinrichtung 30 den Bandabschnitt 6a mit dem Band 6 verbindet. Bei 27 ist wieder eine Klemmeinrichtung schematisch dargestellt, die das Band während des Schneidvorganges festlegt.

Die Fördereinrichtung 29, die die Bandabschnitte 6a aus dem Magazin 28 in Fluchtung zum Band 6 bringt, kann Saugköpfe oder Magnetplatten aufweisen, wie sie den Betriebsgegebenheiten und Materialeigenschaften am besten entsprechen. Die Verbindungseinrichtung 30 kann aus einer Schweißzange bestehen, jedoch kann die Verbindung durch Nieten oder in anderer Weise hergestellt werden.

In Fig. 5 ist eine Andrück- und Führungsrolle 23 dargestellt, die dann Anwendung findet, wenn das Materialband 6 aus den beiden Bandhälften 6A und 6B besteht. In diesem Fall wird der Betrieb genauso wie bei einem einheitlichen Band 6 durchgeführt, nur wird ein Schneidschlitz von vornherein vorgesehen, mit Hilfe eines auf der Andrück- und Führungsrolle 23 vorgesehenen Führungsringes 31. Die Führungsrolle 23 weist des weiteren konische Führungsflächen 32 auf, die sicherstellen, daß die Bandhälften 6A und 6B an dem Führungsring 31 zur Anlage kommen und so einen definierten Führungsschlitz bilden.

Mit den vorstehend beschriebenen Ausführungsbeispielen der Erfindung läßt sich unter entsprechender Anpassung an die jeweiligen betrieblichen Gegebenheiten ein bartfreies Schneiden von Brammen sowohl mit staionärem Brenner als auch mit beweglichen Brennern erzielen.

Bei der in Fig. 6 dargestellten Ausführungsform der Erfindung wird an der Unterseite der zu zerteilenden Bramme 2 im Bereich einer strichpunktiert angedeuteten Schnittlinie 3 ein Abdeckteil 60 in Form einer Metallplatte oder eines ähnlichen abgekanteten Profils angehängt. Die Form und Ausgestaltung dieses Abdeckteils kann je nach den Gegebenheiten der Maschinenausrüstung, der Größe der Bramme und/oder anderer konstruktiver Erfordernisse unterschiedlich sein.

Das Abdeckteil 60 in Fig. 6 ist mit Hilfe von abgewinkelten Klemmhaken 64, 65, 66, 67 an der Unterseite der Bramme 2 befestigt, wobei auf jeder Seite zwei dieser Klemmhaken so angeordnet sind, daß die Schnittlinie 3 jeweils zwischen den beiden auf einer Seite der Bramme 2 gelegenen Klemmhaken 64, 65 bzw. 66, 67 verläuft.

Bei der in Fig. 7 von unten gesehenen dargestellten, im Verlauf einer Schnittlinie 3 zu zerteilenden Bramme 2 ist auf der Unterseite ein Abdeckteil 60a mit Hilfe von vier Klemmhaken 64a bis 67a befestigt. Die Breite dieses Abdeckteils 60a entspricht der Breite der Bramme 2, deshalb können die Klemmhaken 64a bis 67a an den Seiten der Bramme 2 angebracht werden. Auch bei dieser Ausführung verläuft die Schnittlinie 3 jeweils zwischen den beiden Klemmhaken 64a, 65a bzw. 66a, 67a.

In der Seitenansicht, siehe Fig. 8, haben die Klemmhaken 64a bis 67a eine etwa U-förmige Gestalt. Es liegt jeweils der eine Schenkel jedes Klemmhakens 64a ... 67a auf der Oberseite der Bramme 2 und der gegenüberliegende Schenkel auf der Unterseite des Abdeckteils 60a auf.

Ist der Trennschnitt im Verlauf der Schnittlinie 3 durchgeführt, dann entfernt man die an den Brammenenden sich noch befindenden Restabschnitte des Abdeckteils 60 bzw. 60a, beispielsweise durch Abstreifmesser, die einer Brennschneidmaschine zugeordnet sein können. Auf diese Weise entledigt man sich beim Entfernen der geschnittenen Abdeckteile 60 bzw. 60a gleichzeitig aller Schlacken-bärte, die sich an der Unterseite gebildet haben. Eine diesbezügliche Nachbearbeitung der Bramme 2 ist überflüssig.

Patentconsult Radeckestraße 43 8000 München 60 Telefon (089) 883603/883604 Telex 05-212313 Telegramme Patentconsult
Patentconsult Sonnenberger Straße 43 6200 Wiesbaden Telefon (06121) 562943/561998 Telex 04-186237 Telegramme Patentconsult

I.P.U. Limited

Case 27

50, Shirley Street

Nassau/Bahamas

---------------------------

## P a t e n t a n s p r ü c h e
------------------------------------

1. Verfahren zum bartfreien Schneiden von Stranggußstücken,

   d a d u r c h   g e k e n n z e i c h n e t ,

   daß im Schneidbereich an der Unterseite des zu
schneidenden Stranggußstückes, beispielsweise einer
Bramme, ein Abdeckteil angebracht wird,

   - daß der Schnitt durch das Stranggußstück und das
Abdeckteil gleichzeitig durchgeführt wird, und

   - daß anschließend das mitgeschnittene Abdeckteil
von den Enden des Stranggußstückes entfernt wird.

2. Verfahren nach Anspruch 1,

   d a d u r c h   g e k e n n z e i c h n e t ,

   daß das Abdeckteil aus einem Metallblech oder einem

München: R. Kramer Dipl.-Ing. · W. Weser Dipl.-Phys. Dr. rer. nat. · H. P. Brehm Dipl.-Chem. Dr. phil. nat.
Wiesbaden: P. G. Blumbach Dipl.-Ing. · P. Bergen Dipl.-Ing. Dr. jur. · G. Zwirner Dipl.-Ing. Dipl.-W.-Ing.

ähnlich abgekanteten Profil besteht.

3. Verfahren nach Anspruch 1 oder 2,

   d a d u r c h   g e k e n n z e i c h n e t ,

   daß das Abdeckteil an beiden Seiten der Bramme vor und hinter dem durchgeführten Schnitt befestigt wird.

4. Verfahren nach Anspruch 1,

   d a d u r c h   g e k e n n z e i c h n e t ,

   daß das Abdeckteil aus einem Materialband besteht.

5. Verfahren nach Anspruch 4,

   d a d u r c h   g e k e n n z e i c h n e t ,

   daß zum Schneiden eine feststehende Schneideinrichtung verwendet wird, und daß dem Materialband synchron mit dem zu schneidenden Stranggußstück ein Vorschub erteilt wird.

6. Verfahren nach Anspruch 4,

   d a d u r c h   g e k e n n z e i c h n e t ,

   daß die Schneideinrichtung bewegbar angeordnet wird, und daß das Materialband an der Schneidstelle angeordnet und das Stranggußstück anschließend vor dem Schneidvorgang auf das Materialband entsprechend aufgebracht wird.

7. Verfahren nach einem der Ansprüche 4 bis 6,

   d a d u r c h   g e k e n n z e i c h n e t ,

daß das Materialband von einem Wickel abgezogen und in die Arbeitsposition bewegt wird.

8. Verfahren nach einem der Ansprüche 4 bis 6,

   d a d u r c h   g e k e n n z e i c h n e t ,

   daß Bandabschnitte zu einem Materialband verbunden und in die Arbeitsposition bewegt werden.

9. Vorrichtung zur Durchführung des Verfahrens nach einem der Ansprüche 1 bis 3,

   g e k e n n z e i c h n e t   d u r c h

   ein Abdeckteil (60; 60a), welches aus einem flachen, die Unterseite der Bramme (2) abdeckenden plattenartigen Körper besteht, der zwei paarweise angeordnete Befestigungseinrichtungen (64, 65; 64a, 65a; bzw. 66, 67; 66a, 67a) aufweist, die sich im Abstand der Breite der Bramme gegenüberliegen und zwischen denen die Schnittlinie (3) verläuft.

10. Vorrichtung nach Anspruch 9,

    d a d u r c h   g e k e n n z e i c h n e t ,

    daß die Befestigungseinrichtungen aus Klemmhaken (64 bis 67; 64a bis 67a) bestehen, die auf der Oberseite der Bramme (2) und auf der Unterseite des plattenartigen Abdeckteils (60; 60a) zur Auflage kommende abgewinkelte Schenkel aufweisen.

11. Vorrichtung zur Durchführung des Verfahrens nach einem der Ansprüche 1 oder 4 und 5, mit einem feststehenden

0007969

Brenner

g e k e n n z e i c h n e t   d u r c h

eine das Materialband von einem Wickel (5) zwischen
Rollgang (8) und Stranggußstück (2) synchron mit
dem Stranggußstück bewegende Vorschubeinrichtung
(13, 16).


12. Vorrichtung nach Anspruch 11,

d a d u r c h   g e k e n n z e i c h n e t ,

daß im Bereich der Schnittstellung (3) eine oder
mehrere Andrückrollen (9) vorhanden sind.


13. Vorrichtung nach Anspruch 11 oder 12,

d a d u r c h   g e k e n n z e i c h n e t ,

daß auf der dem Bandwickel (5) gegenüberliegenden
Seite der Schnittstelle (3) eine Antriebsrolle (13)
und eine mit dieser zusammenwirkende Gegenrolle
(16) vorgesehen sind, die dem Materialband (6) eine
Vorschubgeschwindigkeit erteilen, die etwas größer
als die Vorschubgeschwindigkeit des Stranggußstückes
(2) ist.


14. Vorrichtung nach einem der Ansprüche 11 bis 13,

d a d u r c h   g e k e n n z e i c h n e t ,

daß im wesentlichen alle Einrichtungen, insbesondere
Wickel (5) und Vorschubeinrichtung (13, 16) auf einer unter dem Rollgang (8) festlegbaren Rahmenkonstruktion (17) angeordnet und so ausgebildet sind, daß insbesondere ein Auswechseln des Wickels (5) möglich ist, wenn dieser aufgebraucht ist.

15. Vorrichtung zur Durchführung des Verfahrens nach Anspruch 1 und 6, mit einem oder mehreren bewegbaren Brennern,

d a d u r c h   g e k e n n z e i c h n e t ,

daß vor der Schnittstelle (3) eine Bandzuführeinrichtung (5, 28) vorgesehen ist, von der über den Rollgang (8) unterhalb des Stranggußstückes (2) ein Materialband (6) zu einer Vorschubeinrichtung (13, 16) verläuft.

16. Vorrichtung nach Anspruch 15,

d a d u r c h   g e k e n n z e i c h n e t ,

daß die Bandzuführeinrichtung aus einem Bandwickel (5) besteht, den ein bewegbares Lager (24) in eine vorbestimmte Lage drängt, vorzugsweise so, daß der höchste Punkt (26) auf dem Umfang des Wickels über der Auflageebene des Stranggußstückes (2) während des Schneidvorganges liegt.

17. Vorrichtung nach Anspruch 15,

d a d u r c h   g e k e n n z e i c h n e t ,

daß die Bandzuführeinrichtung aus einem Magazin (28) besteht, in dem Bandabschnitte (6a) gelagert sind,
die eine Verbindungseinrichtung (30), vorzugsweise
eine Schweißzange zwischen Magazin (28) und Schnittstelle (3) verbindet.

18. Vorrichtung nach einem der Ansprüche 15 bis 17,
d a d u r c h   g e k e n n z e i c h n e t ,
daß zwischen Bandzuführeinrichtung (5; 28) und
Schnittstelle (3) eine Klemmeinrichtung (27) vorgesehen ist.

19. Vorrichtung nach einem der Ansprüche 11 bis 18,
d a d u r c h   g e k e n n z e i c h n e t ,
daß das Materialband (6) aus zwei Bandhälften (6A und
6B) besteht, die getrennt voneinander und zwischen
sich einen Abstand als Schneidschlitz freilassend
geführt sind.

20. Vorrichtung nach Anspruch 19,
d a d u r c h   g e k e n n z e i c h n e t ,
daß im Schnittbereich (3) eine Andrück- und Führungsrolle (23) vorgesehen ist, die in der Mitte einen vorstehenden Führungsring (31), der dem Schneidschlitz
entspricht, aufweist und konische Führungsflächen (32)
besitzt, welche die Bandhälften (6A und 6B) zur Anlage an dem Führungsring (31) bringen.

0007969

1/5

FIG. 1

V_S

FIG. 2

*1a*    *2*    *1b*

*26*   *6*   *13*   *16*

*24*   *27*   *8*   *23*   *22*   *21*   *8*   *15*

*5*    *20*

FIG. 3

3/5

0007969

FIG.4

FIG.5

Fig. 6

Fig. 7

Fig. 8

Europäisches
Patentamt

**EUROPÄISCHER RECHERCHENBERICHT**

0007969

Nummer der Anmeldung

EP 79 10 0192

| Kategorie | Kennzeichnung des Dokuments mit Angabe, soweit erforderlich, der maßgeblichen Teile | betrifft Anspruch |
|---|---|---|
| | US - A - 3 790 744 (AMERICAN CAN) <br> * Zusammenfassung * <br><br> -- | 1 |
| | US - A - 3 909 582 (AMERICAN CAN) <br> * Zusammenfassung * <br><br> ---- | 1 |

**KLASSIFIKATION DER ANMELDUNG (Int. Cl.³)**

B 23 K 7/02

**RECHERCHIERTE SACHGEBIETE (Int. Cl.²)**

B 23 K 7/00
7/02
7/08

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-05-1979 | HOORNAERT |

EPA form 1503.1   06.78